# EUROPEAN PATENT APPLICATION

(11) **EP 4 600 570 A1**
(43) Date of publication of application: **13.08.2025**
(21) Application number: 24200689.8
(22) Date of filing: 17.09.2024
(51) Int. Cl.: F24F 1/0083, F24F 1/029, F24F 1/0358, F24F 3/14, F24F 13/22, B01D 53/26

(54) **DEHUMIDIFIER**

(30) Priority: 07.02.2024 KR 20240018781
(71) Applicant: LG Electronics Inc., Yeongdeungpo-gu Seoul 07336 (KR)
(72) Inventor: PARK, Janghee, 08592 Seoul (KR); JEONG, Yongki, 08592 Seoul (KR); KIM, Kyungrock, 08592 Seoul (KR); LEE, Jinwoo, 08592 Seoul (KR); PARK, Taeju, 08592 Seoul (KR)
(74) Representative: Vossius & Partner Patentanwälte Rechtsanwälte mbB

(57) **Abstract**

The present disclosure relates to a dehumidifier.

The dehumidifier according to an embodiment may include a first part in which a fan, a heat exchanger, and a dehumidification module are installed. The first part may define an upper space of the dehumidifier.

The dehumidifier may include a second part in which a vacuum pump and at least one tank are installed. The second part may define a lower space of the dehumidifier.

The dehumidifier may further include a first partition wall that divides the upper space of the first part and the lower space of the second part into each other.

## Description

### BACKGROUND

The present disclosure relates to a dehumidifier.

A dehumidifier is a type of home appliance that lowers the humidity in a desired space by suctioning in air from a desired space, removing moisture contained in the air, and discharging the dehumidified air to a desired space.

A conventional dehumidifier removes moisture by suctioning air from a desired space and passing the air through a heat exchanger consisting of a condenser and an evaporator, thereby exchanging heat between the refrigerant flowing through the condenser and the evaporator and the air passing through them.

The evaporator absorbs heat from the surrounding air by evaporating the liquid refrigerant, and the condenser releases heat by condensing the gaseous refrigerant and transfers the heat to the surrounding air. In other words, the air passing through the heat exchanger exchanges heat with the refrigerant while passing through the evaporator, thereby lowering the humidity, and the air with the lowered humidity passes through the condenser, exchanges heat with the refrigerant, and the drying process proceeds.

The dried air passing through the heat exchanger is discharged to a desired space, thereby lowering the humidity in the air in the desired space.

According to this conventional dehumidifier, there was a problem that the temperature of the discharged air increased, causing discomfort to the user.

### SUMMARY

An object of the present disclosure is to provide a dehumidifier that may implement constant temperature dehumidification without increasing the temperature of an indoor space by selectively separating moisture in the air through a dehumidification module including a membrane without operating a refrigeration cycle.

An object of the present disclosure is to provide a dehumidifier that may shorten the dehumidification time because dehumidification may be accomplished by passing through a dehumidification module without requiring time for stabilization of the refrigeration cycle.

An object of the present disclosure is to provide a dehumidifier that may easily separate and condense moisture by generating a first suction flow of air to remove moisture and a second suction flow of air to perform heat exchange.

An object of the present disclosure is to provide a dehumidifier equipped with a two-way suction fan so that the first suction flow and the second suction flow may be suctioned into the dehumidifier in directions facing each other.

An object of the present disclosure is to provide a dehumidifier in which moisture separation performance may be improved by being configured so that the first direction of the suction flow of air to remove moisture and the second direction of flow of separated water vapor are perpendicular to each other.

An object of the present disclosure is to provide a dehumidifier that may move water vapor in the air passing through the dehumidification module to the inside of the membrane by generating a pressure difference between the inside and outside of the membrane using a vacuum pump.

An object of the present disclosure is to provide a dehumidifier that facilitates the removal of condensed moisture by allowing water vapor separated from a dehumidification module to flow into a heat exchanger via a vacuum pump and exchange heat with indoor air in the heat exchanger.

An object of the present disclosure is to provide a dehumidifier in which the first part where the fan that generates air flow is disposed is disposed in the upper space of the dehumidifier, so that air may be easily suctioned into the indoor space.

An object of the present disclosure is to provide a dehumidifier in which a dehumidification module that separates moisture from the air is disposed in the first part, and the separated water vapor falls in the direction of gravity, making it easy to collect water vapor and forming a compact piping connected to a vacuum pump.

An object of the present disclosure is to provide a dehumidifier in which the main flow of indoor air requiring dehumidification and the sub-flow for the heat exchanger may easily occur in two directions using one fan by placing the heat exchanger in the first part.

An object of the present disclosure is to provide a dehumidifier that may facilitate the generation of a main flow in which a relatively large amount of suction is performed and a sub-flow in which a small amount of suction is performed and may prevent pressure loss by dividing the first part through a partition wall and disposing a dehumidification module and a heat exchanger in the divided area.

An object of the present disclosure is to provide a dehumidifier that may easily suction the separated water vapor into the vacuum pump by the gravitational effect by disposing a vacuum pump for suctioning water vapor separated from a dehumidification module in the second part and forming the second part as the lower space of the dehumidifier.

An object of the present disclosure is to provide a dehumidifier that quickly transfers high-temperature water vapor passing through the vacuum pump to the heat exchanger, is easy to block noise generated by the vacuum pump and is also effective for maintenance accessibility by disposing the vacuum pump in the second part below the heat exchanger.

An object of the present disclosure is to provide a dehumidifier that facilitates the flow of condensed water in the direction of gravity by disposing a drain tank for storing water condensed in a heat exchanger in the second part.

An object of the present disclosure is to provide a dehumidifier in which the upper space of the dehumidifier may be efficiently utilized and may improve the user's accessibility to the supply tank by disposing the supply tank that supplies water to the dehumidification module in the second part.

The dehumidifier according to an embodiment may include a first part in which a fan, a heat exchanger, and a dehumidification module are installed.

The first part may form an upper space of the dehumidifier.

The dehumidifier may include a second part in which a vacuum pump and at least one tank are installed.

The second part may form a lower space of the dehumidifier.

The dehumidifier may further include a first partition wall that divides the upper space of the first part and the lower space of the second part into each other.

The moisture (water vapor) separated from the dehumidification module is not 100% water and may be understood as humid air with high water vapor partial pressure.

The dehumidifier may further include a connection pipe through which water vapor separated from the dehumidification module flows, and the vacuum pump may be connected to the connection pipe.

The vacuum pump may be disposed below the dehumidification module.

The connection pipe may be disposed below the dehumidification module.

The connection pipe may include a first connection pipe connected to the dehumidification module and connected to the suction side of the vacuum pump, and water vapor separated from the dehumidification module may be suctioned into the vacuum pump through the first connection pipe.

The connection pipe may include a second connection pipe connected to the discharge side of the vacuum pump and connected to the heat exchanger, and high-temperature water vapor discharged from the vacuum pump may flow into the heat exchanger through the second connection pipe.

The heat exchanger may be configured to exchange heat between air suctioned from the second suction part and water vapor flowing through the second connection pipe.

The dehumidifier may further include a condensate pipe through which water condensed in the heat exchanger flows, and the condensate pipe may be connected to a discharge side of the heat exchanger.

The condensate pipe is provided in the second part and may be disposed to communicate with a space where the drain tank is mounted.

The dehumidifier may include a second part forming a machine room.

In the machine room, one or more tanks storing water and a vacuum pump connected to a dehumidification module may be installed.

The machine room may include a third partition wall separating the one or more tanks and the vacuum pump. Through the third partition wall, noise caused by the vacuum pump may be prevented, and the safety of users accessing the tank may be improved.

The third partition wall may include a first through-hole through which the connection pipe, through which moisture separated from the dehumidification module flows, passes. The connection pipe may pass through the first through hole and be connected to the vacuum pump.

The third partition wall may include a second through-hole. A condensate pipe configured to guide condensate condensed in the heat exchanger to the drain tank may pass through the second through-hole.

The third partition wall may include a first condensate guide having a guide surface to allow water discharged from the condensate pipe to flow into the drain tank.

The one or more tanks may include a drain tank configured to store the condensate discharged from the heat exchanger.

The drain tank may be mounted in a direction approaching the first condensate guide.

The drain tank may include a second condensate guide. The second condensate guide may provide a passage, through which water is introduced into the drain tank, together with the first condensate guide.

The one or more tanks may include a water tank that stores water to be supplied to the dehumidification module.

The water tank may include a tank duct configured to discharge the water from the water tank to the outside, and the tank duct may extend from the inside of the water tank to the outside.

The dehumidifier may include a water supply connection pipe connected to the tank duct and configured to supply the water from the water tank to the dehumidification module.

A water pump may be installed in the water supply connection pipe to provide driving force to supply water from the water tank to the dehumidification module.

The second part may include a fourth partition wall configured to divide the drain tank and the water tank into each other.

The second part may further include a sensor configured to sense a magnet provided in the tank, thereby sensing whether the one or more tanks are installed.

The sensor may be provided on the third partition wall.

The second part may include a base provided with a rail to guide the installation of the one or more tanks.

In one embodiment, a dehumidifier includes: a main body including a suction part and a fan; and a dehumidification module including a dehumidification member configured to separate moisture of air suctioned from the suction part by driving of the fan.

The dehumidifier may further include: a vacuum pump configured to provide driving force by which the moisture separated from the dehumidification module is discharged to the outside of the dehumidification module; a heat exchanger fluidly connected to the vacuum pump to condense the separated moisture; and a drain tank configured to store water condensed in the heat exchanger.

The main body may be configured so that a first part configured to generate an air flow passing through the dehumidification module and the fan and a second part in which the vacuum pump and the drain tank are disposed are partitioned by a partition wall.

The second part may be disposed below the partition wall so that the dehumidification module is mounted at an upper side of the partition wall, and the separated moisture falls toward the vacuum pump.

The dehumidification module may include a connection port coupled to the partition wall to discharge the separated moisture, and the partition wall may include a port communication hole through which the connection port passes.

The partition wall may include a protrusion into which the connection port is inserted, and the dehumidifier may further include a connection pipe connected to the vacuum pump in the protrusion.

The connection pipe may constitute at least a portion of the second part.

The connection pipe may include: a first connection pipe coupled to the partition wall and connected to a suction-side of the vacuum pump; and a second connection pipe connected to a discharge-side of the vacuum pump to transfer the separated moisture to the heat exchanger.

The partition wall may include an inlet port connected to the connection pipe to supply the separate moisture to the heat exchanger.

The dehumidifier may further include: a discharge port provided on the partition wall and coupled to a discharge part of the heat exchanger; and a condensate pipe connected to the discharge port to guide condensate to the drain tank.

The partition wall may be a first partition wall, and the dehumidifier may further include a second partition wall configured to divide the upper part into a first space, in which the dehumidification module is installed, and a second space, in which the fan is installed, the second partition wall having a fan suction part.

The dehumidifier may further include a third partition wall configured to divide the lower part into a first space, in which the drain tank is installed, and a second space, in which the vacuum pump is installed.

The third partition wall may include a first through-hole, wherein the dehumidifier may further include a connection pipe extending from the dehumidification module to pass through the first through-hole and configured to guide the moisture separated from the dehumidification module to the vacuum pump.

The third partition wall may include a second through-hole, and the dehumidifier may further include a condensate pipe extending from the heat exchanger and coupled to the second through-hole, the condensate pipe being configured to guide water condensed in the heat exchanger to the drain tank.

The lower part may include: a supply tank; and a fourth partition wall configured to separate the supply tank and the drain tank from each other.

The dehumidifier may further include: a supply connection pipe connected to the supply tank and extending to pass through the partition wall, the supply connection pipe being configured to supply water from the supply tank to the dehumidification module; and a water pump installed on the supply connection pipe.

In another embodiment, a dehumidifier includes an upper part and a lower part, which are divided by a partition wall.

The upper part may include a fan configured to suction air into a suction part, a dehumidification module including a dehumidification member configured to separate moisture of the air suctioned by the suction part, and a heat exchanger configured to condense the separated moisture.

The lower part may include a vacuum pump configured to suction the moisture separated from dehumidification module, a drain tank configured to store water condensed in the heat exchanger, and a supply tank configured to supply the water to the dehumidification module.

The partition wall may include: an inlet port configured to supply the separated moisture to the heat exchanger; and an outlet port configured to discharge the water condensed in the heat exchanger.

The partition wall may include a port connection hole configured to guide the moisture separated from the heat exchanger to the vacuum pump.

The partition wall may include a supply through-hole through which a supply connection pipe connected to the supply tank passes.

The lower part may further include a third partition wall configured to divide the lower part into a first space, in which the vacuum pump is installed, and a second space, in which the drain tank and the supply tank are installed.

The lower part may further include a fourth partition wall configured to divide the lower part into a first space, in which the drain tank is installed, and a second space, in which the supply tank is installed.

According to an embodiment of the present disclosure, constant temperature dehumidification may be easily implemented without increasing the temperature of the indoor space by selectively separating moisture in the air through a dehumidification module including a membrane without operating a refrigeration cycle.

According to an embodiment of the present disclosure, dehumidification may be accomplished by passing through a dehumidification module without requiring time for stabilization of the refrigeration cycle, so the dehumidification time may be shortened.

According to an embodiment of the present disclosure, separation and condensation of moisture may be easily performed by generating a first suction flow of air to remove moisture and a second suction flow of air to perform heat exchange.

According to an embodiment of the present disclosure, a two-way suction fan is provided so that the first suction flow and the second suction flow may be easily suctioned into the dehumidifier in directions facing each other.

According to an embodiment of the present disclosure, the first direction of the suction flow of air to remove moisture and the second direction of the flow of separated water vapor are configured to be perpendicular to each other, so that moisture separation performance may be improved.

According to an embodiment of the present disclosure, water vapor in the air passing through the dehumidification module may be moved into the inside of the membrane by generating a pressure difference between the inside and outside of the membrane using a vacuum pump.

According to an embodiment of the present disclosure, water vapor separated from the dehumidification module flows into a heat exchanger via a vacuum pump and exchanges heat with indoor air in the heat exchanger, making it easy to remove condensed moisture.

According to an embodiment of the present disclosure, the first part where the fan that generates air flow is disposed is disposed in the upper space of the dehumidifier, so that air suction from the indoor space may be easily achieved.

According to an embodiment of the present disclosure, a dehumidification module that separates moisture in the air is disposed in the first part, so that the separated water vapor falls in the direction of gravity, making it easy to collect water vapor and compactly constructing the piping connected to the vacuum pump.

According to an embodiment of the present disclosure, by placing the heat exchanger in the first part, the main flow of indoor air requiring dehumidification and the sub-flow for the heat exchanger may be easily generated in two directions using one fan.

According to an embodiment of the present disclosure, the first part is divided through a partition wall and a dehumidification module and a heat exchanger are disposed in the divided area, so that a main flow in which a relatively large amount of suction is performed and a sub flow in which a small amount of suction is performed may be easily generated and pressure loss may be prevented.

According to an embodiment of the present disclosure, a vacuum pump for suctioning water vapor separated from the dehumidification module is disposed in the second part, and the second part forms the lower space of the dehumidifier, so that the separated water vapor may be easily suctioned into the vacuum pump by the effect of gravity.

According to an embodiment of the present disclosure, the vacuum pump is disposed in the second part below the heat exchanger, so that high-temperature water vapor passing through the vacuum pump is quickly transferred to the heat exchanger, it is easy to block noise generated from the vacuum pump, and it may be effective in accessibility for maintenance.

According to an embodiment of the present disclosure, a drain tank storing water condensed in a heat exchanger is disposed in the second part, thereby facilitating the flow of condensed water in the direction of gravity.

According to an embodiment of the present disclosure, the supply tank that supplies water to the dehumidification module is disposed in the second part, so that the upper space of the dehumidifier may be efficiently utilized and the user's accessibility to the supply tank may be improved.

### BRIEF DESCRIPTION OF THE DRAWINGS

FIG. 1 is a perspective view illustrating the outer appearance of a dehumidifier according to an embodiment of the present disclosure.
FIG. 2 is a rear perspective view illustrating the configuration of a dehumidifier according to an embodiment of the present disclosure.
FIG. 3 is a front perspective view illustrating the configuration of a dehumidifier according to an embodiment of the present disclosure.
FIG. 4 is a left side perspective view illustrating the configuration of a dehumidifier according to an embodiment of the present disclosure.
FIG. 5 is a right side perspective view illustrating the configuration of a dehumidifier according to an embodiment of the present disclosure.
FIG. 6 is an exploded perspective view illustrating a dehumidifier according to an embodiment of the present disclosure.
FIG. 7 is a cross-sectional view taken along line 7-7 in FIG. 1
FIG. 8 is a top perspective view illustrating the configuration of a dehumidification module according to an embodiment of the present disclosure.
FIG. 9 is a lower perspective view illustrating the configuration of a dehumidification module according to an embodiment of the present disclosure.
FIG. 10 is an exploded perspective view illustrating a dehumidification module according to an embodiment of the present disclosure.
FIG. 11 is a view illustrating the configuration of a dehumidification member according to an embodiment of the present disclosure.
FIG. 12 is a view illustrating a state where the first suction flow and discharge flow are generated in the dehumidifier according to an embodiment of the present disclosure.
FIG. 13 is a top perspective view illustrating the configuration of the first part and the second part in the dehumidifier according to an embodiment of the present disclosure.
FIG. 14 is a perspective view illustrating the internal configuration of a dehumidifier in a state where the dehumidification module according to an embodiment of the present disclosure is removed.
FIG. 15 is a lower perspective view illustrating the configuration of the first part and the second part in the dehumidifier according to an embodiment of the present disclosure.
FIG. 16 is a view illustrating a partial configuration of a dehumidifier according to an embodiment of the present disclosure.
FIG. 17 is a view illustrating a state where a portion of the discharge flow of the fan according to an embodiment of the present disclosure flows into the inlet guide.
FIG. 18 is a view illustrating the configuration of a first partition wall and a second partition wall according to an embodiment of the present disclosure.
FIG. 19 is an exploded perspective view illustrating the configuration of a heat exchanger according to an embodiment of the present disclosure.
FIG. 20 is a perspective view illustrating the main body configuration of a heat exchanger according to an embodiment of the present disclosure.
FIG. 21 is a perspective view illustrating the configuration of the second part of the dehumidifier according to an embodiment of the present disclosure.
FIG. 22 is a plan view illustrating the configuration of the second part of the dehumidifier according to an embodiment of the present disclosure.
FIG. 23 is a view illustrating the part where the drain tank and the supply tank are installed among the second part of the dehumidifier according to an embodiment of the present disclosure.
FIG. 24 is a view illustrating a state where a condensate pipe extends from a heat exchanger according to an embodiment of the present disclosure.
FIG. 25 is a view illustrating the configuration of a first partition wall and a third partition wall according to an embodiment of the present disclosure.
FIG. 26 is a view illustrating the configuration of a drain tank according to an embodiment of the present disclosure.
FIG. 27 is a view illustrating the cover of a drain tank according to an embodiment of the present disclosure.
FIG. 28 is a view illustrating the configuration of a supply tank according to an embodiment of the present disclosure.
FIG. 29 is a cross-sectional view taken along line 29-29 of FIG. 21.
FIG. 30 is a view illustrating a state where the first suction flow and the second suction flow are suctioned and a discharge flow is generated in the dehumidifier according to an embodiment of the present disclosure.
FIG. 31 is a view illustrating a state where fluid is supplied from a supply tank to a dehumidification module in a dehumidifier according to an embodiment of the present disclosure.

### DETAILED DESCRIPTION OF THE EMBODIMENTS

Hereinafter, some embodiments of the present disclosure will be described in detail with reference to the accompanying drawings. It is noted that the same or similar components in the drawings are designated by the same reference numerals as far as possible even if they are illustrated in different drawings. In addition, in describing embodiments of the present disclosure, if detailed descriptions of related known configurations or functions are determined to impede understanding of the embodiments of the present disclosure, the detailed descriptions will be omitted.

In addition, in the description of the embodiments of the present disclosure, the terms such as first, second, A, B, (a) and (b) may be used. These terms are only used to distinguish the component from other components, and the essence, sequence, or order of the corresponding component is not limited by the term. It should be understood that when an element is described as being "connected," "coupled", or "joined" to another element, the former may be directly connected or jointed to the latter or may be "connected", coupled" or "joined" to the latter with a third component interposed therebetween.

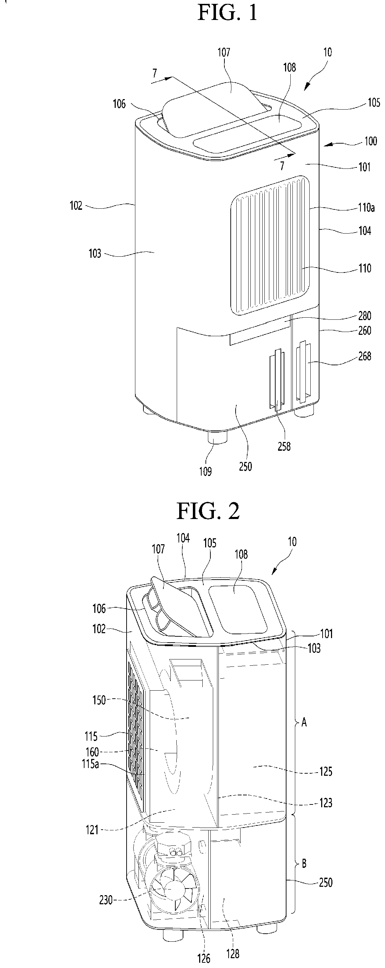

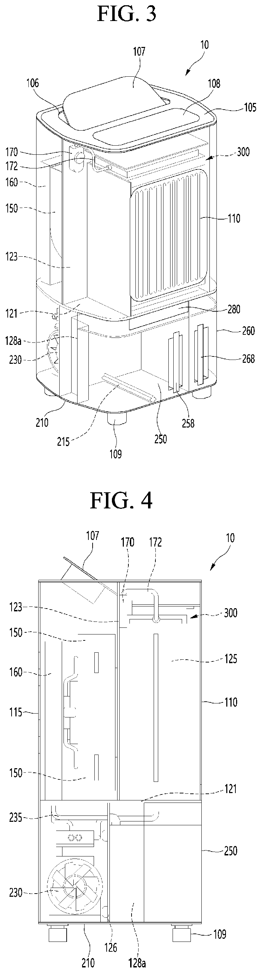

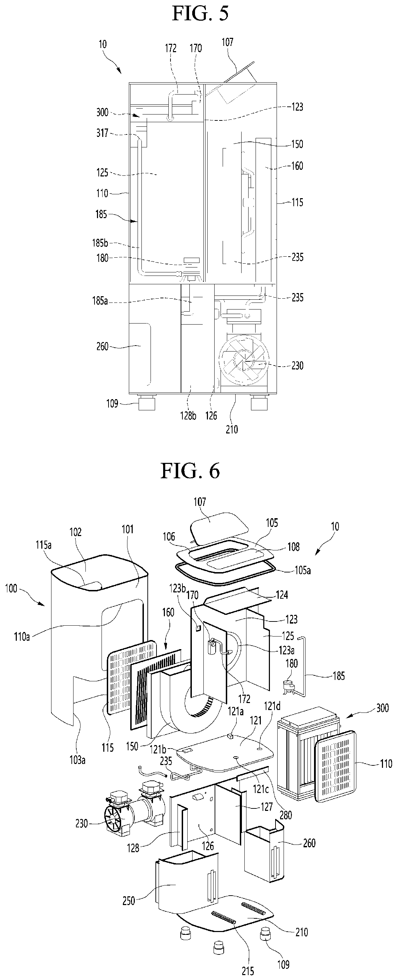

FIG. 1 is a perspective view illustrating the outer appearance of a dehumidifier according to an embodiment of the present disclosure, FIG. 2 is a rear perspective view illustrating the configuration of a dehumidifier according to an embodiment of the present disclosure, FIG. 3 is a front perspective view illustrating the configuration of a dehumidifier according to an embodiment of the present disclosure, FIG. 4 is a left side perspective view illustrating the configuration of a dehumidifier according to an embodiment of the present disclosure, and FIG. 5 is a right side perspective view illustrating the configuration of a dehumidifier according to an embodiment of the present disclosure.

Referring to FIGS. 1 to 5, the dehumidifier 10 according to an embodiment of the present disclosure may have a three-dimensional shape in which the height in the vertical direction is greater than the width in the front and rear direction.

Directions are defined. In FIG. 1, the surface on which the first suction part 110a is formed is defined as the front surface, the surface on which the second suction part 115a is formed in FIG. 2 is defined as the rear surface, and the surface on which the discharge part 106 is formed is defined as the upper surface.

The dehumidifier 10 may include a main body 100 that forms an outer appearance. The main body 100 may accommodate a number of components for suctioning air, removing moisture from the suctioned air, and discharging dehumidified air.

The main body 100 may include a front portion 101, a rear portion 102, a first side portion 103, a second side portion 104, an upper portion 105, and a lower portion. The lower portion may be defined by the base 210.

The front portion 101 may include a first suction part 110a that suctions air. A first suction grill 110 may be provided in the first suction part 1 10a. Air from an indoor space subject to dehumidification may be suctioned in through the first suction part 1 10a. The air flow suctioned from the first suction part 110a may be referred to as "first suction flow (first flow)" or "main flow."

The rear portion 102 may be disposed to face the front portion 101.

The rear portion 102 may include a second suction part 115a that suctions air. A second suction grill 115 may be provided in the second suction part 115a. Air from the indoor space to flow into the heat exchanger 160 may be suctioned in through the second suction part 115a. The air flow suctioned from the second suction part 115a may be referred to as "second suction flow (second flow)" or "sub flow."

The first side portion 103 connects one side of the front portion 101 and the rear portion 102 and may form one side of the dehumidifier.

The second side portion 104 connects the other side of the rear portion 102 of the front portion 101 and may form the other side of the dehumidifier. The second side portion 104 may be disposed to face the first side portion 103.

The upper portion 105 may form a discharge part 106 that discharges air from the dehumidifier 10. The discharge part 106 may be provided with a discharge vane 107 that controls opening or closing of the discharge part 106.

The upper portion 105 may include a display 108 that outputs operation information of the dehumidifier 10. The display 108 may be provided with an input unit for inputting operation commands.

The display 108 is disposed at a location adjacent to the front portion 101 of the upper surface portion 105, and the discharge part 106 may be formed at a location adjacent to the rear portion 102 of the upper portion 105.

When a user approaches the dehumidifier 10, the user may easily operate the display 108 by approaching the front portion 101 in a direction closer to the front portion 101. In addition, since the tanks 250 and 260 provided in the dehumidifier 10 are detachably provided on the front portion 101, user accessibility and convenience of operation may be improved.

Tanks 250 and 260 for storing water may be provided at the lower part of the dehumidifier 10 so that they may be mounted or detached.

The tanks 250 and 260 may include a drain tank 250 in which condensed water is stored after water vapor separated from the dehumidification module 300 is condensed in the heat exchanger 160. The drain tank 250 may include a first handle 258 that the user may hold.

The tanks 250 and 260 may include a supply tank 260 that stores water to be supplied to the dehumidification module 300 in order to improve the moisture separation characteristics of the dehumidification module 300. The supply tank 260 may include a second handle 268 that the user may hold.

The dehumidifier 10 may further include an auxiliary display 280 that provides information regarding whether the tanks 250 and 260 are mounted. The auxiliary display 280 may be provided in the front portion of the first partition wall 121 . The auxiliary display 280 may provide a notification regarding emptying or supplying water to the tanks 250 and 260, based on the water levels of the tanks 250 and 260.

When the tanks 250 and 260 are mounted, the auxiliary display 280 may be provided at a location shielded by the tanks 250 and 260. For example, the tanks 250 and 260 are made of a transparent material, so even if the tanks 250 and 260 are mounted, the information output from the auxiliary display 280 will be visible from the outside.

A base 210 is provided on the lower portion the dehumidifier 10, and the base 210 may function as a support plate that forms the machine room of the dehumidifier 10. A plurality of legs 109 placed on the ground may be provided on the lower side of the base 210.

The dehumidifier 10 may include a first part A forming an upper portion and a second part B forming a lower portion. The first part A may be referred to as an "upper part" and the second part B may be referred to as a "lower part."

Inside the main body 100, a first partition wall 121 that divides a first space (upper space) where the components constituting the first part A are installed and a second space (lower space) where the components constituting the second part B are installed may be provided.

Components constituting the first part A may include a dehumidification module 300, a fan 150, and a heat exchanger 160.

The components constituting the first part A may further include a valve device 170 and a supply pipe 172 that supply at least some of the air discharged from the fan 150 to the dehumidification module 300.

Components constituting the second part B may include a vacuum pump 230 and tanks 250 and 260. The tanks 250 and 260 may include a drain tank 250 and a supply tank 260.

The vacuum pump 230 may be aligned below the fan 150 and the heat exchanger 160, and the tanks 250 and 260 may be aligned below the dehumidification module 300.

The components constituting the first part A or the second part B may be connected to the supply tank 260 and include a water pump 180 and a supply connection pipe 185.

The dehumidification module 300 may be installed on the upper surface of the first partition wall 121 .

The dehumidification module 300 may be disposed inside the first suction part 110a. Accordingly, the dehumidification module 300 may be disposed so that air flowing into the first part A through the first suction part 110a passes.

The first part A may further include a second partition wall 123 that divides the installation space of the dehumidification module 300 and the installation space of the fan 150. The second partition wall 123 allows the first suction flow to pass through the dehumidification module 300 in the first suction part 110a and the second suction flow to pass through the heat exchanger 160 in the second suction part 115a to be separated from each other.

The flow rate of the first suction flow and the flow rate of the second suction flow may be formed differently. Since the first suction flow and the second suction flow are separated by the second partition wall 123, it is possible to prevent flow loss from occurring due to a pressure difference between the mutual flows.

The flow rate of the first suction flow may be greater than the second suction flow rate. For example, the flow rate of the second suction flow may be formed at a level of 60% of the flow rate of the first suction flow rate. For example, the first suction flow rate may be generated by about 170 CMH and the second suction flow rate may be generated by about 100 CMH.

The first suction flow is a flow of air to be dehumidified and requires a large amount, but the second suction flow may require a relatively small amount to condense moisture in the heat exchanger 160.

The fan 150 may be controlled so that the suction flow rate of the first suction side where the first suction flow is suctioned is greater than the second suction side where the second suction flow is suctioned.

The dehumidification module 300 may be disposed in the space between the second partition wall 123 and the first suction part 110a. The space between the second partition wall 123 and the first suction part 110a may be referred to as a "dehumidification module space part."

The fan 150 and the heat exchanger 160 may be disposed in the space between the second partition wall 123 and the second suction part 115a. The space between the second partition wall 123 and the second suction part 115a may be referred to as a "fan space part" or "heat exchanger space part."

The air suctioned through the first suction part 110a may be separated from moisture after passing through the dehumidification module 300. The moisture-separated air may be suctioned into the suction side of the fan 150 after passing through the second partition wall 123.

The fan 150 may include a bidirectional suction fan that suctions and discharges air from both directions. In other words, the fan 150 may include a two-way centrifugal fan that suctions air in axial directions on both sides and discharges the air in radial directions.

The suction side of the fan 150, where the air passing through the dehumidification module 300 is suctioned, may be referred to as the "first suction side." In other words, the first suction flow may be understood as an air flow flowing from the first suction part 110a to the first suction side of the fan 150.

The fan 150 may include a main plate 151, a first blade 151a arranged on one side of the main plate 151 and disposed on the first suction side, and a second blade 151b arranged on the other side of the main plate 151 and disposed on the second suction side. The first and second blades 151a and 151b may be disposed across from each other with respect to the main plate 151.

The dehumidification module 300 may be detachably mounted inside the main body 100.

The dehumidifier 10 may further include a module mounting guide 125 that guides the mounting of the dehumidification module 300. The module mounting guide 125 may form a portion of the first part A.

The module mounting guide 125 is provided inside the main body 100 and may be connected to the second partition wall 123 . The module mounting guide 125 may extend from the second partition wall 123 toward the first suction part 110a.

A plurality of module mounting guides 125 are provided, and the plurality of module mounting guides 125 may be spaced apart from each other. The dehumidification module 300 may be mounted in the space between the plurality of module mounting guides 125.

The plurality of module mounting guides 125 may be disposed adjacent to or in contact with both sides of the dehumidification module 300.

The heat exchanger 160 may be disposed inside the second suction part 115a. Accordingly, the heat exchanger 160 may be disposed so that air flowing into the first part A through the second suction part 115a passes.

The heat exchanger 160 may be disposed between the second suction part 115a and the fan 150. Accordingly, the air suctioned through the second suction part 115a may pass through the heat exchanger 160 and then be suctioned into the suction side of the fan 150. At this time, the air may condense the water vapor while exchanging heat with the water vapor separated from the dehumidification module 300.

The suction side of the fan 150, where the air passing through the heat exchanger 160 is suctioned, may be referred to as the "second suction side." In other words, the second suction flow may be understood as an air flow flowing from the second suction part 115a to the second suction side of the fan 150.

The first suction flow and the second suction flow are suctioned in the axial direction of the fan 150 and discharged in the radial direction, and then may be discharged through the discharge part 106 provided on the upper portion 105 of the dehumidifier 10.

The second part B may be provided on the lower side of the first partition wall 121.

The second part B may further include a third partition wall 126 that divides the installation space of the vacuum pump 230 and the installation space of the tanks 250 and 260. The third partition wall 126 may partition the installation space of the vacuum pump 230 and the installation space of the tanks 250 and 260 in the front and rear direction.

By the third partition wall 126, the noise generated by the vacuum pump 230 may be prevented from being transmitted to the front side of the dehumidifier 10, that is, to the installation space of the tanks 250 and 260 that users often access.

The third partition wall 126 can easily provide an installation area for sensors 256 and 266 for detecting water levels in the tanks 250 and 260 and a delivery path for condensate to be delivered to the drain tank 250.

The third partition wall 126 is connected to the base 210 forming the lower portion of the dehumidifier 10 and may be configured to protrude upward from the base 210.

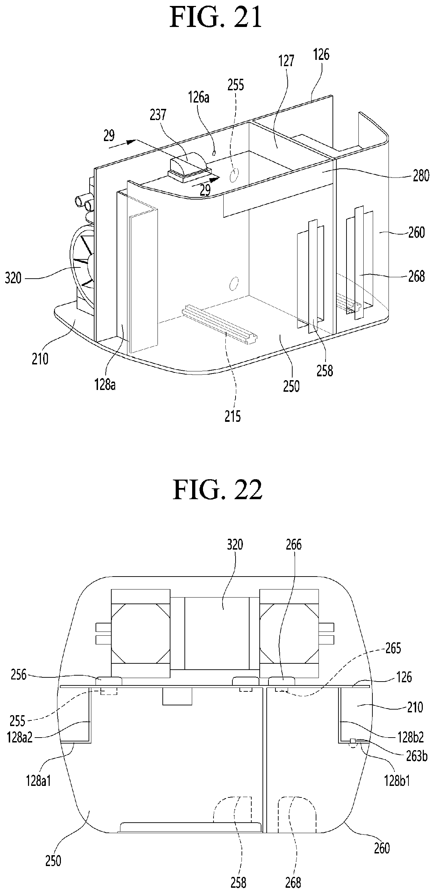

The second part B may further include a fourth partition wall 127 (see FIG. 21) that divides the installation space of the tanks 250, 260 into the installation space of the drain tank 250 and the installation space of the supply tank 260. The fourth partition wall 127 may divide the installation space of the drain tank 250 and the installation space of the supply tank 260 in the left and right direction.

The tanks 250 and 260 may be detachably mounted on the dehumidifier 10.

The second part B may include a tank mounting guide 128 provided on both left and right sides of the base 210 to guide the mounting of the tanks 250 and 260.

The tank mounting guide 128 may include a first mounting guide 128a that guides the mounting of the drain tank 250. The first mounting guide 128a is connected to the base 210 and may be configured to protrude upward from the base 210.

The drain tank 250 may be detachably mounted in the space between the fourth partition wall 127 and the first mounting guide 128a. The first mounting guide 128a may be disposed adjacent to or in contact with one side of the drain tank 250.

The tank mounting guide 128 may include a second mounting guide 128b that guides the mounting of the supply tank 260. The second mounting guide 128b is connected to the base 210 and may be configured to protrude upward from the base 210.

The supply tank 260 may be detachably mounted in the space between the fourth partition wall 127 and the second mounting guide 128b. The second mounting guide 128b may be disposed adjacent to or in contact with one side of the supply tank 260.

The base 210 may include a rail 215 that guides the mounting of the tanks 250 and 260. The rail 215 protrudes from the base 210 and may be configured to extend in the direction in which the tanks 250 and 260 are mounted, that is, in the front and rear direction. The rail 215 may be provided on the lower side of the drain tank 250 and the lower side of the supply tank 260, respectively.

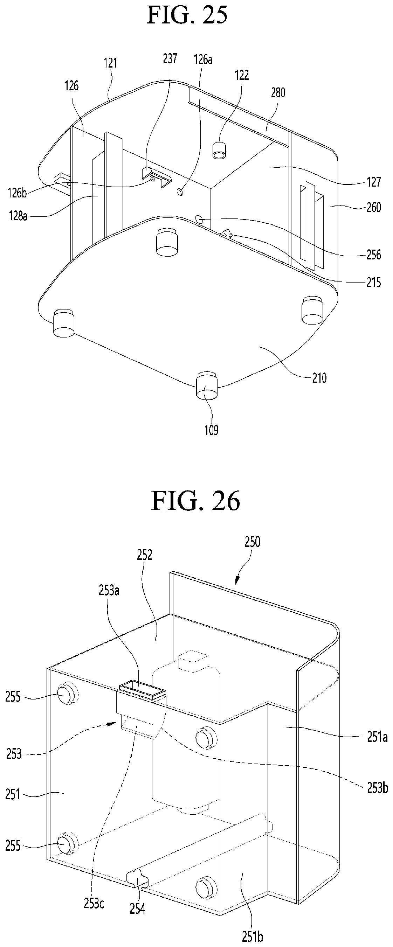

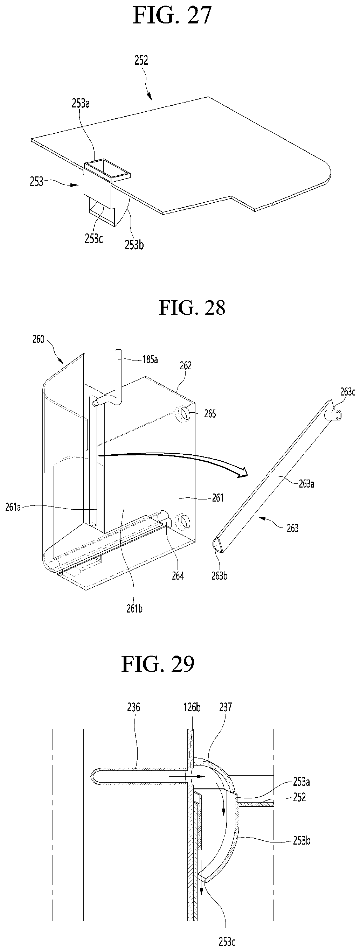

The plurality of rails 215 may be inserted into the rail groove 254 (see FIG. 26) formed on the lower surface of the drain tank 250 and the rail groove 264 (see FIG. 28) formed on the lower surface of the supply tank 260.

The dehumidifier 10 may include air supply devices 170 and 172 that supply air to the dehumidification module 300 in order to improve the dehumidification performance of the dehumidification module 300. The air supply devices 170 and 172 may be configured to supply at least some of the air discharged from the fan 150 to the dehumidification module 300.

The air supply devices 170 and 172 may include a valve device 170 disposed on the discharge side of the fan 150. For example, the valve device 170 may be disposed on the second partition wall 123. In particular, the second valve device 170 may be disposed at a position adjacent to the upper end of the second partition wall 123 adjacent to the discharge side of the fan 150.

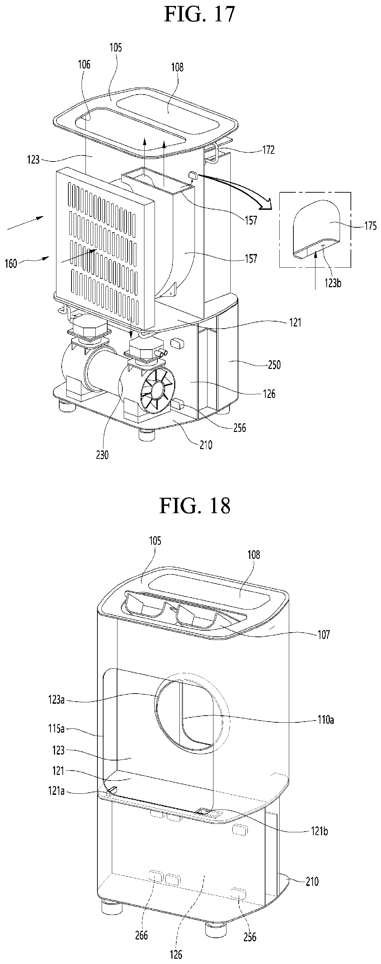

At least some of the air discharged from the fan 150 may flow into the second valve device 170 through the guide hole 123b (see FIG. 17). The guide hole 123b may be formed in the second partition wall 123.

The second valve device 170 may be installed in the guide hole 123b.

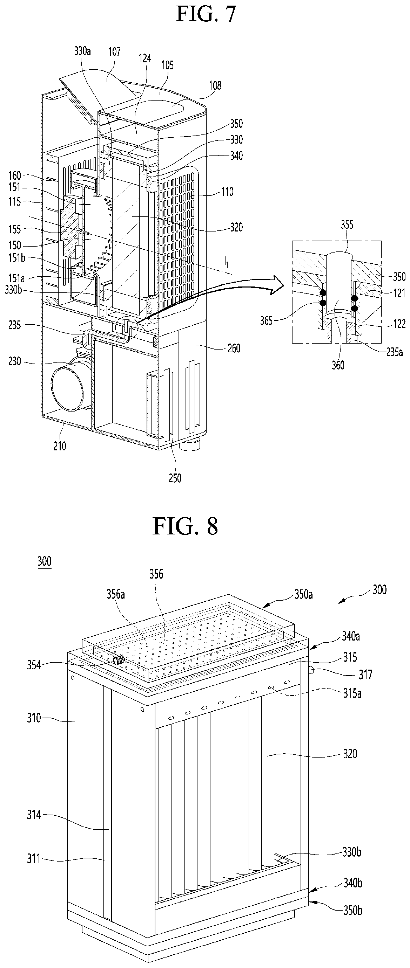

The air supply devices 170 and 172 are connected to the valve device 170 and may further include a supply pipe 172 that supplies air that has passed through the valve device 170 to the dehumidification module 300. The supply pipe 172 may be connected to the connection port 354 (see FIG. 8) of the dehumidification module 300.

The dehumidifier 10 may include a connection pipe 235 through which water vapor separated from the dehumidification module 300 flows and a vacuum pump 230 connected to the connection pipe 235. The connection pipe 235 may be referred to as a "water vapor connection pipe."

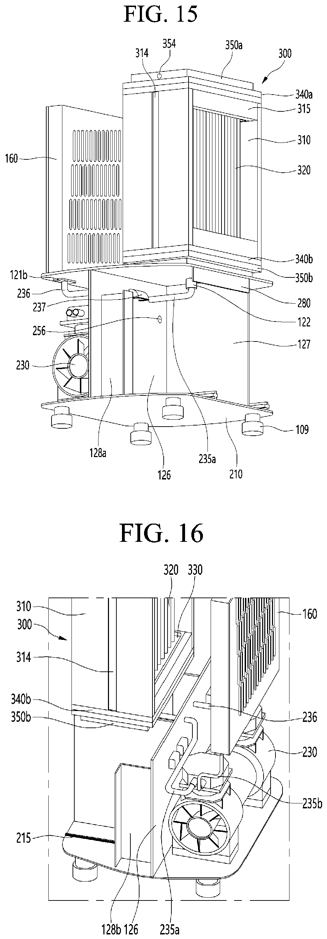

The connection pipe 235 includes a first connection pipe 235a (see FIG. 16) which is connected to the dehumidification module 300 and connected to the suction side of the vacuum pump 230, and the separated water vapor from the dehumidification module 300 may be suctioned into the vacuum pump 230 through the first connection pipe 235a.

The first connection pipe 235a extends from the lower surface of the first partition wall 121, and the first partition wall 121 may have a port communication hole 121c (see FIG. 6) connected to the dehumidification module 300.

The connection pipe 235 is connected to the discharge side of the vacuum pump 230 and includes a second connection pipe 235b (see FIG. 16) connected to the heat exchanger 160, and high-temperature water vapor discharged from the vacuum pump 230 may flow into the heat exchanger 160 through the second connection pipe 235b.

The water vapor passing through the vacuum pump 230 may be compressed by the vacuum pump 230 and have a high temperature state, for example, temperature of about 45 to 50°C. The vacuum pump 230 may also be referred to as a "vacuum compression pump."

The water vapor passing through the vacuum pump 230 may form a flow rate of less than about 5% of the total suction flow rate of the system, that is, the flow rate suctioned through the first suction part 110a. Therefore, the water vapor may be sufficiently converted into condensate by exchanging heat with the air suctioned through the second suction part 115a.

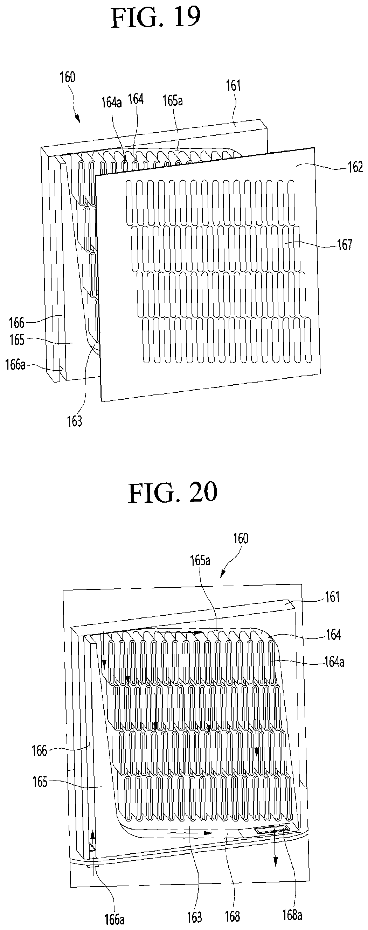

The second connection pipe 235b may be connected to the inlet port 121a (see FIG. 6) of the first partition wall 121. The inlet hole 121a may be coupled to the inlet 166a (see FIG. 19) of the heat exchanger 160.

The heat exchanger 160 may be configured to exchange heat between the air suctioned in from the second suction part 115a and the water vapor flowing through the second connection pipe 235b. Since the temperature of the suctioned air is lower than the temperature of the separated water vapor, the water vapor may be condensed during the heat exchange process.

For example, the second connection pipe 235b may be connected to the lower end portion of the heat exchanger 160.

The dehumidifier 10 further includes a condensate pipe 236 through which water condensed in the heat exchanger 160 flows, and the condensate pipe 236 may be connected to the discharge side of the heat exchanger 160. For example, the condensate pipe 236 may be connected to the lower end portion of the heat exchanger 160.

The condensate pipe 236 is connected to the discharge port 121b (see FIG. 6) of the first partition wall 121 and may extend from the lower surface of the first partition wall 121.

The condensate pipe 236 is provided in the second part B and may be disposed to communicate with a space where the drain tank 260 is mounted.

The dehumidifier 10 is fluidly connected to the water tank 260 and may further include a water pump 180 that provides driving force to supply water from the supply tank 260 to the dehumidification module 300.

For example, the water pump 180 is disposed in the first part A and may be seated on the upper side of the first partition wall 121. However, it is not limited to this, and the water pump 180 may be placed in the second part B.

The dehumidifier 10 is connected to the water pump 180 and may further include a supply connection pipe 185 that delivers water from the supply tank 260 to the dehumidification module 300.

The supply connection pipe 185 is connected to the duct 263 of the supply tank 260 and may include a first connection pipe 185a (see FIG. 28) that delivers water from the supply tank 260 to the water pump 180. The first connection pipe 185a may pass through the first partition wall 121 and be connected to the water pump 180.

The first partition wall 121 may include a water supply through-hole 121d (see FIG. 6) through which the first connection pipe 185a passes.

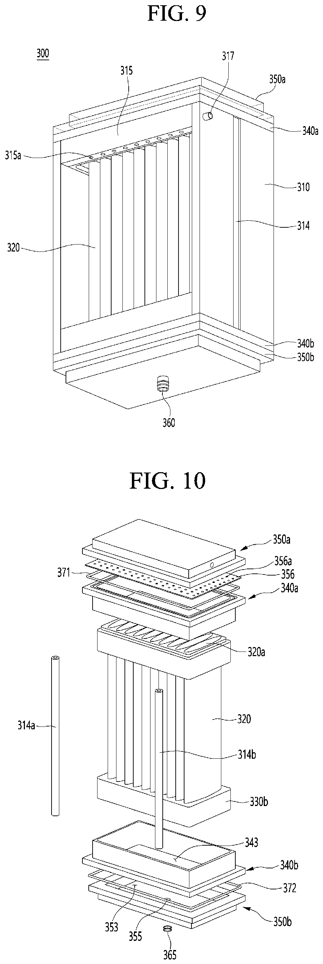

The supply connection pipe 185 is connected to the water supply pump 180 and may include a second connection pipe 185b extending to the dehumidification module 300. The second connection pipe 185b may be connected to the water supply port 317 (see FIG. 9) of the dehumidification module 300.

FIG. 6 is an exploded perspective view illustrating a dehumidifier according to an embodiment of the present disclosure, and FIG. 7 is a cross-sectional view taken along line 7-7 in FIG. 1.

Referring to FIG. 6, the dehumidifier 10 according to an embodiment of the present disclosure may include a main body 100 that accommodates a plurality of components for dehumidifying air.

The main body 100 may include a front portion 101, a rear portion 102, two side portions 103 and 104, and an upper portion 105.

The upper portion 105 may consist of a detachable plate. The upper portion 105 may be coupled to the open upper end portion of the main body 100.

The upper portion 105 may include a discharge part 106 that discharges air, a discharge vane 107 that opens and closes the discharge part 106, and a display 108.

A sealing member 105a may be provided between the open upper end portion of the main body 100 and the upper portion 105 to prevent air leakage.

The main body 100 may include a first suction part 110a through which the first suction flow is suctioned. The first suction part 110a is formed by penetrating at least a portion of the front portion 101, and a first suction grill 110 may be mounted on the first suction part 110a.

The main body 100 may include a second suction part 115a through which the second suction flow is suctioned. The second suction part 115a is formed by penetrating at least a portion of the rear portion 102, and a second suction grill 115 may be mounted on the second suction part 115a.

Between the first suction part 110a and the second suction part 115a, a dehumidification module 300, a fan 150, and heat exchanger 160 may be disposed in sequence in the direction from the first suction part 110a toward the second suction part 115a.

The first partition wall 121 that divides the dehumidifier 10 into the first part A and the second part B may be formed with communication parts 121a, 121b, and 121c through which water vapor or condensate passes. The communication parts 121a, 121b, and 121c may include a port communication hole 121c that guides the water vapor separated from the dehumidification module 300 to flow to the vacuum pump 230.

The communication parts 121a, 121b, and 121c may include an inlet port 121a that guides high-temperature water vapor passing through the vacuum pump 230 to flow into the heat exchanger 160.

The communication parts 121a, 121b, and 121c may include a discharge port 121b that guides the condensed water condensed in the heat exchanger 160 to flow into the drain tank 250.

The dehumidifier 10 may include a second partition wall 123 which extends upward from the first partition wall 121 and divides

the internal space of the first part A into a space where the dehumidification module 300 is located and a space where the fan 150, and a heat exchanger are located.

The second partition wall 123 may have a fan suction part 123a which is formed on the outlet side of the dehumidification module 300 based on the first suction flow and guides the air passing through the dehumidification module 300 to the suction side of the fan 150.

The fan suction part 123a may include a round suction guide (bell mouth) so that air may be smoothly suctioned in the axial direction of the fan 150.

The dehumidifier 10 may include two module mounting guides 125 that protrude from the second partition wall 123 and guide the mounting of the dehumidification module 300. The module mounting guide 125 may protrude from the second partition wall 124 in a direction toward the first suction part 110a.

The two module mounting guides 125 may be disposed on both sides of the fan suction part 123a. The front and rear width of the dehumidification module 300 supported by the two module mounting guides 125 may be larger than the diameter of the fan suction part 123a. Accordingly, the dehumidification module 300 may cover the fan suction part 123a.

The first suction flow passes through the second partition wall 123 through the fan suction part 123a and may be suctioned into the first suction side of the fan 150.

The second suction flow suctioned through the second suction part 115a may pass through the heat exchanger 160 and then be suctioned into the second suction side of the fan 150.

The dehumidifier 10 may further include a plate 124 coupled to the second partition wall 123. For example, the plate 124 is coupled to the upper end portion of the second partition wall 123 and may protrude in a direction toward the front portion 101.

The plate 124 may be disposed to partition the space between the upper portion 105 and the upper end of the dehumidification module 300. By driving the vacuum pump 230, vacuum pressure is applied to the dehumidification module 300, and the plate 124 may block the vacuum pressure from acting on the upper portion 105.

The main body 100 may include an opening 103a to form an inlet space in which the tanks 250 and 260 are mounted. The opening 103a is formed from the front portion 101 to both side portions 103 and 104 and may be configured to be open in the direction in which the tanks 250 and 260 are pulled in or out.

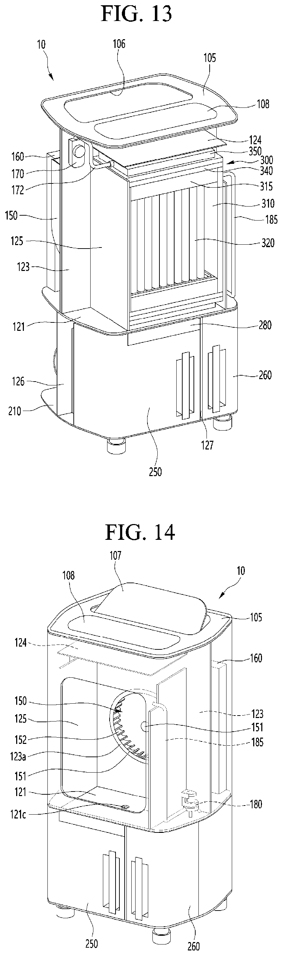

Referring to FIG. 7, the first part A may include a fan motor 155 for driving the fan 150. The fan motor 155 may be coupled to the central hub 151 (see FIG. 14) of the fan 150. The shaft of the fan motor 155 may be coupled to the hub 151 in the axial direction (front and rear direction).

The center line ℓ1 passing through the center of the fan motor 155 in the front and rear direction may pass through the dehumidification module 300, the fan suction part 123a, and the heat exchanger 160. For example, the center line ℓ1 may pass through the center of the dehumidification module 300, the center of the fan suction part 123a, and the center of the heat exchanger 160.

The dehumidification module 300 may be seated on the first partition wall 121.

The dehumidification module 300 may include a dehumidification member 320 that selectively separates moisture.

The dehumidification module 300 may further include a fixing part 330 supporting an end portion of the dehumidification member 320 and a first cap 340 in which the fixing part 330 is filled.

The dehumidification module 300 may further include a second cap 350 that covers the first cap 340.

The fixing part 330, the first cap 340, and the second cap 350 may be provided on both sides of the dehumidification member 320, respectively. In other words, the fixing part 330, the first cap 340, and the second cap 350 may be provided on the upper and lower sides of the dehumidification member 320, respectively.

The lower surface of the dehumidification module 300 may be coupled to the first partition wall 121.

The dehumidification module 300 may include a connection port 360 protruding from the second cap 350 in a direction toward the first partition wall 121. The connection port 360 may be coupled to the protrusion 122 of the first partition wall 121. The protrusion 122 may protrude downward from the lower surface of the first partition wall 121.

For example, the connection port 360 may be inserted into the protrusion 122.

A sealing member 365 may be provided on the outer peripheral surface of the connection port 360 to seal the space between the protrusion 122 and the connection port 360. By the sealing member 365, the connection port 360 and the protrusion 122 may be firmly coupled.

A plurality of sealing members 365 may be provided.

A cap hole 355 is formed in the second cap 350, and the cap hole 355 may extend to the connection port 360. Moisture (water vapor) separated from the dehumidification module 300 may be discharged to the outside of the dehumidification module 300 through the cap hole 355.

A connector 235 that guides the flow of water vapor, that is, a first connector 235a, may be coupled to the protrusion 122. The first connection pipe 235a may extend from the protrusion 122 to the vacuum pump 230 and be connected to the vacuum pump 230.

The first connection pipe 235a may communicate with the connection port 360 inside the protrusion 122.

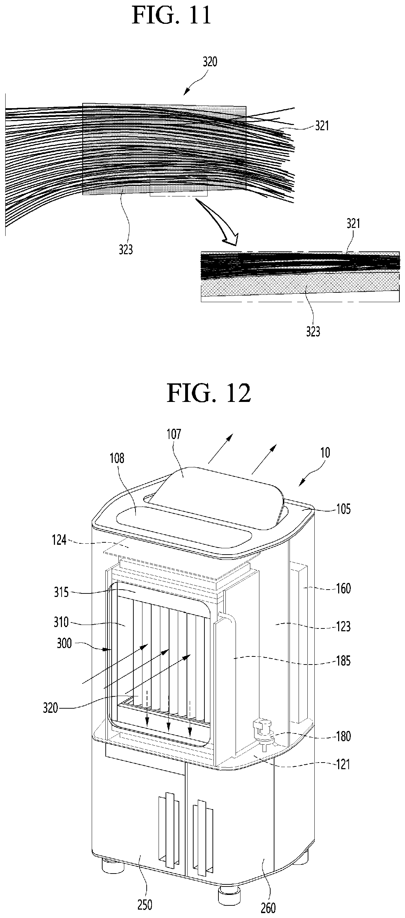

FIG. 8 is a top perspective view illustrating the configuration of a dehumidification module according to an embodiment of the present disclosure, FIG. 9 is a lower perspective view illustrating the configuration of a dehumidification module according to an embodiment of the present disclosure, FIG. 10 is an exploded perspective view illustrating a dehumidification module according to an embodiment of the present disclosure, and FIG. 11 is a view illustrating the configuration of a dehumidification member according to an embodiment of the present disclosure.

Referring to FIGS. 7, 8 to 11 together, the dehumidification module 300 according to an embodiment of the present disclosure may be detachably mounted on the dehumidifier 10.

The dehumidification module 300 may include a dehumidification member 320 capable of selectively separating moisture from the suctioned air

The dehumidification member 320 may include a membrane.

In detail, the dehumidification member 320 may include polymer membrane fibers 321 having a hollow fiber structure with excellent selectivity for moisture. The polymer membrane fiber 321 may be cut to a predetermined length and used. The polymer membrane fiber 321 may be referred to as a "hollow fiber membrane."

For example, the polymer membrane fiber 321 may be configured to have a diameter of about 400 to 420 µm.

The polymer membrane fiber 321 may be provided in multiple strands.

The dehumidification member 320 may further include a packing member 323 surrounding the plurality of polymer membrane fibers 321 to fix (maintain the shape of) the polymer membrane fibers 321 composed of multiple strands.

By the packing member 323, the plurality of polymer membrane fibers 321 may form a bundle. The bundle of dehumidification members 320 may constitute a single dehumidification member.

The packing member 323 is made of a resin material and has strong resistance to water and may inhibit bacterial growth or mold growth. In addition, the packing member 323 may perform the function of protecting the dehumidification member 321 by blocking large dust in the air. For example, the packing member 323 may be made of polypropylene.

The packing member 323 may be configured to include a number of small through-holes to allow wet air to pass through. For example, the packing member 323 may be configured as a mesh type.

The dehumidification module 300 may be configured to provide a plurality of such dehumidification members 320. For example, as illustrated in FIG. 8, the dehumidification module 300 may be configured to have about 10 dehumidification members 320 disposed side by side.

The dehumidification module 300 may further include fixing parts 330a and 330b configured by a potting method to fix the dehumidification member 320. The fixing parts 330a and 330b may be formed by filling and solidifying the inside of the first caps 340a and 340b in a liquid form to fix the positions of the plurality of dehumidification members 320.

For example, the fixing parts 330a and 330b may be made of urethane or epoxy material.

The fixing parts 330a and 330b may include a first fixing part 330a for fixing one end portion of the dehumidification member 320 and a second fixing part 330b for fixing the other end portion thereof.

The first caps 340a and 340b may be referred to as "potting caps."

The first fixing part 330a may be disposed inside the upper end cap 340a provided on the upper side of the dehumidification member 320 among the first caps 340a and 340b. The second fixing part 330b may be disposed inside the lower end cap 340b provided on the lower side of the dehumidification member 320 among the first caps 340a and 340b.

A potting space 343 may be formed inside the first caps 340a and 340b so that the fixing parts 330a and 330b may be disposed.

The end portion 320a of the dehumidification member 320 fixed by the fixing parts 330a and 330b may be exposed to the outside of the fixing parts 330a and 330b.

The dehumidification module 300 may further include second caps 350a and 350b that cover the first caps 340a and 340b. The second caps 350a and 350b may be referred to as "end caps."

The second caps 350a and 350b may include a first end cap 350a that covers the upper end cap 340a and a second end cap 350b that covers the lower end cap 340b.

The first end cap 350a may be provided with a connection port 354 through which at least some of the air discharged from the fan 150 flows. Air that has passed through the valve device 170 and the supply pipe 172 may flow into the interior of the first end cap 350a through the connection port 354.

The dehumidification module 300 may further include a distribution plate 356 provided inside the first end cap 350a. The distribution plate 356 may be supported on the end portion of the upper end cap 340a and shielded by the first end cap 350a.

The connection port 354 may communicate with a space (distribution space) between the distribution plate 356 and the upper surface of the first end cap 350a. Accordingly, air may flow into the distribution space through the connection port 354 and flow toward the distribution plate 356.

A plurality of distribution holes 356a may be formed in the distribution plate 356. Air flows toward the end portion 320a of the dehumidification member 320 through the plurality of distribution holes 356a and may flow toward the inner peripheral surface forming the hollow portion of the dehumidification member 320.

Due to the pressure difference between the inside and outside of the dehumidification member 320, water vapor may accumulate on the inner wall of the dehumidification member 320 when the water vapor passes through the dehumidification member 320. Such water vapor may deteriorate the dehumidification performance of the dehumidification member 320.

In order to solve this problem, at least some of the air discharged from the fan 150 is bypassed to pass through the distribution hole 356a and supplied to the dehumidification member 320 to remove water vapor accumulated on the inner wall.

A recessed part 353 may be formed in the second caps 350a and 350b. The recessed part 353 may form a space between the end portion 320a of the dehumidification member 320 and the end surfaces of the second caps 350a and 350b.

The recessed part 353 of the first end cap 350a forms a space between the distribution plate 356 and the upper end surface of the first end cap 350a, and thus the flow path of air flowing into the distribution hole 356a may be formed.

The recessed part 353 of the second end cap 350b may form a flow path through which moisture (water vapor) separated from the dehumidification member 320 flows into the cap hole 355.

The dehumidification module 300 may further include a support 314 to reinforce the one-way supporting force of the dehumidification member 320. For example, the support 314 may reinforce the vertical support of the dehumidification member 320.

Since the dehumidification member 320 is formed to be relatively long in the vertical direction, the support 314 can provide the supporting force in the vertical direction.

The support 314 may extend between the upper end cap 340a and the lower end cap 340b. One end portion of the support 314 may be connected to the upper end cap 340a and the other end portion may be connected to the lower end cap 340b. For example, the support 314 may have the shape of a bar.

A plurality of supports 314 are provided, and the plurality of supports 314 may include a first support 314a provided on one side of the upper end cap 340a and the lower end cap 340b, and a second support 314b provided on the other side thereof.

The dehumidification module 300 may include a housing 310 disposed to surround at least a portion of the dehumidification member 320. The housing 310 may include parts that cover both sides of the plurality of dehumidification members 320 and parts that cover a portion of the upper end portion and a portion of the lower end portion of the plurality of dehumidification members 320.

The housing 310 may function as a member that blocks the open space around the dehumidification members 320 to prevent air from leaking (loss) into the space surrounding the plurality of dehumidification members 320 and the support 314.

A coupling hole 311 to which the support 314 is coupled may be formed in the housing 310.

The housing 310 may include a water supply duct 315 for supplying water to the dehumidification member 320. The water supply duct 315 may be provided in a part that covers a portion of the upper end portion of the plurality of dehumidification members 320.

Water supplied from the water supply pump 180 may flow through the water supply duct 315. A water supply hole 315a may be formed on the lower surface of the water supply duct 315 to supply water to the dehumidification member 320.

A plurality of water supply holes 315a are formed, and the plurality of water supply holes 315a may be arranged in the direction in which the plurality of dehumidification members 320 are arranged, that is, in the left and right direction based on FIG. 1.

The water supply hole 315a may be located on the upper front side of the dehumidification member 320. Even if water is sprayed toward the front of the dehumidification member 320 through the water supply hole 315a, the water may be in contact with the dehumidification member 320 due to the suction force of the fan 150.

Water may be supplied intermittently through the water supply hole 315a.

The housing 310 may include a water supply port 317 connected to the supply connection pipe 185, that is, the second connection pipe 185b. The water supply port 317 may be connected to the water supply duct 315. For example, the water supply port 317 may pass through the housing 310 and be connected to the side of the water supply duct 315.

Water supply pumped from the water pump 180 may flow into the water supply port 317 through the second connection pipe 185b and flow into the water supply duct 315.

When the dehumidifier 10 is operated in an environment where absolute humidity is very low, the moisture separation performance of the dehumidification member 320 may be weakened. Therefore, in order to improve the moisture separation performance, water can be supplied to the dehumidification member 320 (improvement of wettability of the dehumidification member).

In order to form such a water supply flow path, the present embodiment may provide the water pump 180, connection pipe 185, and water supply duct 315.

The dehumidification module 300 may further include sealers 371 and 372 for sealing the space between the first caps 340a and 340b and the second caps 350a and 350b.

The sealers 371 and 372 may include a first sealer 371 provided between the upper end cap 340a and the first end cap 350a. The first sealer 371 may be in contact with the upper end cap 340a and the first end cap 350a.

The sealers 371 and 372 may include a second sealer 372 provided between the lower end cap 340b and the second end cap 350b. The second sealer 372 may be in contact with the lower end cap 340b and the second end cap 350b.

FIG. 12 is a view illustrating a state where the first suction flow and discharge flow are generated in the dehumidifier according to an embodiment of the present disclosure, FIG. 13 is a top perspective view illustrating the configuration of the first part and the second part in the dehumidifier according to an embodiment of the present disclosure, FIG. 14 is a perspective view illustrating the internal configuration of a dehumidifier in a state where the dehumidification module according to an embodiment of the present disclosure is removed, FIG. 15 is a lower perspective view illustrating the configuration of the first part and the second part in the dehumidifier according to an embodiment of the present disclosure, FIG. 16 is a view illustrating a partial configuration of a dehumidifier according to an embodiment of the present disclosure, and FIG. 17 is a view illustrating a state where a portion of the discharge flow of the fan according to an embodiment of the present disclosure flows into the inlet guide.

Referring to FIGS. 12 and 13, in the dehumidifier 10 according to an embodiment of the present disclosure, a first suction flow may be generated as the main flow of air to be dehumidified by driving the fan 150.

When the fan 150 is driven, air can be suctioned in through the first suction part 110a in a direction crossing the front portion 101. The air suctioned in from the first suction part 110a may pass in the direction in which the plurality of dehumidification members 320 extend, that is, in the direction (front and rear direction) that intersects the vertical directions.

By driving the vacuum pump 230, a pressure difference is generated between the outside and inside of the dehumidification member 320, and a negative pressure lower than the external pressure may be formed inside the dehumidification member 320.

In the process of air passing through the dehumidification member 320, moisture contained in the air may contact the surface of the dehumidification member 320 and be adsorbed. In addition, the adsorbed moisture may be selectively separated from the air by diffusing and then desorbing from the surface.

The separated moisture flows downward inside the dehumidification member 320 and may flow into the cap hole 355 of the second end cap 350b. In other words, the flow direction (downward) of the separated moisture (dotted arrow in FIG. 12) may form a direction perpendicular to the flow direction (front and rear direction) of the air (solid line arrow in FIG. 12).

Referring to FIG. 14, the air from which the moisture has been separated may be suctioned in the axial direction of the fan 150. At this time, the air that has passed through the dehumidification module 300 may be suctioned into the hub 151 of the fan 150 through the fan suction part 123a of the second partition wall 123 . A fan motor 155 may be coupled to the hub 151.

The fan 150 may include a plurality of blades 152 arranged in the peripheral direction of the hub 151. By rotating the plurality of blades 152, air suctioned in the axial direction (front and rear direction) of the fan 150 may be discharged in the radial direction of the fan 150.

The refrigerant discharged from the fan 150 may flow upward toward the upper portion 105 and be discharged from the discharge part 106.

Referring to FIGS. 15 and 16, the dehumidification module 300 and the heat exchanger 160 may be disposed to be spaced apart from each other with a fan 150 between the dehumidification module 300 and the heat exchanger 160. When the fan 150 is driven, the first suction flow flowing from the dehumidification module 300 to the first suction side of the fan 150 and the second suction flow flowing from the heat exchanger 160 to the second suction side of the fan 150 may be generated.

The fan 150 may be configured as a two-way suction fan so that the first suction flow and the second suction flow may be generated.

With respect to the first partition wall 121, a first connection pipe 235a may be provided on the lower side of the first partition wall 121 to form a water vapor flow path separated from the dehumidification module 300.

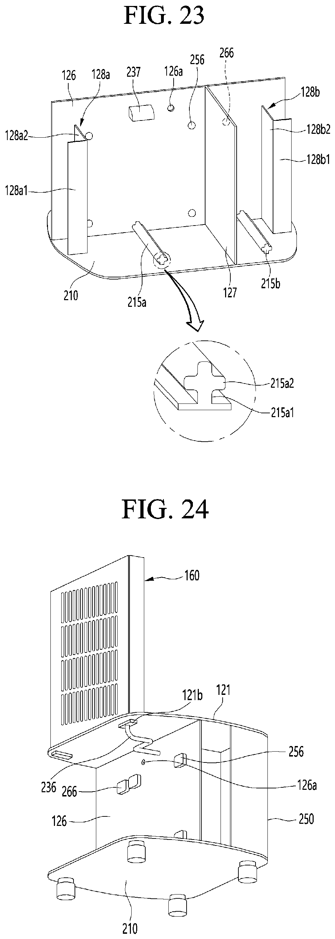

The first connection pipe 235a may extend from the lower surface of the dehumidification module 300 to the suction side of the vacuum pump 230. At this time, the first connection pipe 235a may extend to the vacuum pump 230 through the first through-hole 126a (see FIG. 23) of the third partition wall 126.

A second connection pipe 235b may be provided below the first partition wall 121 to form a flow path for water vapor passing through the vacuum pump 230 and flowing into the heat exchanger 160. The second connection pipe 235b may extend from the discharge side of the vacuum pump 230 to the lower surface of the heat exchanger 160.

A condensate pipe 236 may be provided below the first partition wall 121 to discharge condensate generated in the heat exchanger 160. The condensate pipe 236 extends from the lower surface of the heat exchanger 160 and may be coupled to the second through-hole 126b (see FIG. 25) of the second partition wall 126. Condensate flowing through the condensate pipe 236 may flow into the drain tank 250 through the second partition wall 126.

Referring to FIG. 17, the second suction flow of air suctioned from the second suction part 115a may pass through the heat exchanger 160 and then be suctioned into the second suction side of the fan 150. Additionally, the air is discharged in the radial direction of the fan 150 and may flow upward through the fan discharge part 157 provided at the upper end of the fan 150.

At least some of the air that has passed through the fan 150 may flow into the guide hole 123b adjacent to the upper end portion of the fan 150. The guide hole 123b may be formed to pass through the second partition wall 123.

The second partition wall 123 may include an inlet guide 175 that guides air to flow into the guide hole 123b. The inlet guide 175 may protrude from the second partition wall 123 toward the space where the fan 150 is located.

The lower surface of the inlet guide 175 is open, and the open lower surface may be introduced into the guide hole 123b. Air may flow into the valve device 170 provided on the partition 123 through the inlet guide 175 and the guide hole 123b.

The valve device 170 may be disposed in the guide hole 123b in a space where the dehumidification module 300 is installed. In other words, the inlet guide 175 and the valve device 170 may be disposed opposite to each other with respect to the second partition wall 123.

A supply pipe 172 is connected to the valve device 170, and the supply pipe 174 may be connected to the connection port 354 of the dehumidification module 300.

The valve device 170 is provided to be open or closed, and when the valve device 170 is opened, air passes through the valve device 170 and the supply pipe 172 and then may be supplied to the distribution plate 356 of the dehumidification module 300.

FIG. 18 is a view illustrating the configuration of a first partition wall and a second partition wall according to an embodiment of the present disclosure, FIG. 19 is an exploded perspective view illustrating the configuration of a heat exchanger according to an embodiment of the present disclosure, and FIG. 20 is a perspective view illustrating the main body configuration of a heat exchanger according to an embodiment of the present disclosure.

Referring to FIG. 18, the dehumidifier 10 may include a main body 100 through which air is suctioned through the front and rear surfaces. The penetrated front surface of the main body 100 may form a first suction part 1 10a, and the penetrated rear surface of the main body 100 may form a second suction part 115a.

A second partition wall 123 is provided between the first suction part 110a and the second suction part 115a. The second partition wall 123 may form a fan suction part 121a that is fluidly connected to the first suction part 110a.

The dehumidifier 10 may include a first partition wall 121 that divides the internal space of the main body 100 into a first part A and a second part B. The heat exchanger 160 may be seated on the first partition wall 121.

The first partition wall 121 may form an inlet port 121a that guides high-temperature water vapor passing through the vacuum pump 230 to flow into the heat exchanger 160. For example, the inlet port 121a may be configured to protrude from the first partition wall 121 by a predetermined height.

The first partition wall 121 may form a discharge port 121b that guides the condensate condensed in the heat exchanger 160 to flow into the drain tank 250. For example, the discharge port 121b may be configured to protrude from the first partition wall 121 by a predetermined height.

The inlet port 121a and the discharge port 121b may be provided on an edge side of the first partition wall 121.

The heat exchanger 160 may be disposed above the inlet port 121a and the discharge port 121b.

The heat exchanger 160 may include a first part 161 and a second part 162 coupled to the first part 161. The first part 161 may constitute the main body of the heat exchanger 160, and the second part 162 may constitute the cover of the heat exchanger 160.

The first part 161 may include a plate part 163 and a plurality of protrusions 164 provided on the plate part 163 and forming a flow path for air passing through the heat exchanger 160. The protrusion 164 may protrude from the plate part 163 in a direction toward the second part 162.

The plurality of protrusions 164 may be disposed to form a plurality of rows in the vertical and left and right directions, respectively.

The protrusion 164 may form a hole 164a through which air passes. The hole 164a may form an internal space (flow channel) of the protrusion 164.

The first part 161 may include a wall 165 provided to surround the plurality of protrusions 164. The wall 165 may protrude from the plate part 163 in a direction toward the second part 162.

The space between the wall 165 and the plurality of protrusions 164 and the space between the plurality of protrusions 164 may form an internal flow path 165a through which water vapor flowing into the heat exchanger 160 flows

The heat exchanger 160 may include an inlet 166a connected to the inlet port 121a. The inlet 166a may be formed on the lower surface of the heat exchanger 160. The inlet 166a may be formed at an end portion of the wall 165 .

The heat exchanger 160 may include a flow path groove 166 that communicates with the inlet 166a and forms a flow path for water vapor flowing into the heat exchanger 160. The flow path groove 166 may be formed by recessing at least a portion of the wall 165.

The flow path groove 166 may be formed to face upward from the lower surface of the heat exchanger 160. An end portion of the flow path groove 166 may form the inlet 166a.

Water vapor flowing into the flow path groove 166 through the inlet 166a may flow through the internal flow path 165a. The water vapor in the internal flow path 165a may flow downward due to gravity and exchange heat with air flowing through the hole 164a of the protrusion 164.

The heat exchanger 160 may be referred to as a "sensible heat exchanger" in that it exchanges heat between the air suctioned into the dehumidifier 10 and the moisture (water vapor) separated from the dehumidification module 300.

The second part 162 may include a plurality of holes 167. The hole 167 may function as an inflow hole through which air flows into the heat exchanger 160. A flange protrudes from the rear surface of the hole 167, and the flange may be inserted into the hole 164a of the first part 161. Accordingly, the air flowing into the hole 167 may flow into the hole 164a of the protrusion 164 and be discharged from the heat exchanger 160.

For convenience of explanation, the hole 164a of the first part 161 may be referred to as a "first hole" and the hole 167 of the second part 162 may be referred to as a "second hole."

Unlike the above description, in terms of air flow, the heat exchanger 160 may be disposed so that air flows into the first hole 164a of the first part 161 and air is discharged through the second hole 167 of the second part 162.

Referring to FIG. 20, the first part 161 may include a discharge part 168a that discharges condensate generated during the heat exchange process. The discharge part 168a may be formed on the lower surface of the heat exchanger 160.

The discharge part 168a may be formed in the water collection part 168 defined at the lower inner surface of the wall 165. The water collection part 168 may be understood as a place where moisture condensed during heat exchange with air falls and collects.

The water collection part 168 is formed to be inclined downward for smooth flow of condensate, and the discharge part 168a may be formed at the lowest point of the inclined surface of the water collection part 168.

FIG. 21 is a perspective view illustrating the configuration of the second part of the dehumidifier according to an embodiment of the present disclosure, FIG. 22 is a plan view illustrating the configuration of the second part of the dehumidifier according to an embodiment of the present disclosure, FIG. 23 is a view illustrating the part where the drain tank and the supply tank are installed among the second part of the dehumidifier according to an embodiment of the present disclosure, FIG. 24 is a view illustrating a state where a condensate pipe extends from a heat exchanger according to an embodiment of the present disclosure, and FIG. 25 is a view illustrating the configuration of a first partition wall and a third partition wall according to an embodiment of the present disclosure.

Referring to FIGS. 21 to 25, the dehumidifier 10 according to an embodiment of the present disclosure may include a second part B forming a machine room.

The second part B may include tanks 250 and 260 in which water is stored and a vacuum pump 320 which is provided on one side of the tanks 250 and 260, is fluidly connected to the dehumidification module 300 and thus drives to create negative pressure in the internal space of the dehumidification member 320.

The second part B may further include a base 210 that forms a seating surface for the tanks 250 and 260 and the vacuum pump 320.

The second part B may further include a third partition wall 126 that divides the installation space of the tanks 250 and 260 and the installation space of the vacuum pump 320. The third partition wall 126 may protrude upward from the base 210.

The third partition wall 126 may include a first through-hole 126a through which the first connection pipe 235a passes.

The third partition wall 126 may include a second through-hole 126b to which the condensate pipe 236 is connected. For example, the condensate pipe 236 may be inserted into the second through-hole 126b.

The third partition wall 126 may include a first condensate guide 237 that guides the water flowing through the condensate pipe 236 to flow into the drain tank 250. The first condensate guide 237 may protrude from the third partition wall 126 toward the space where the drain tank 250 is located.

The first condensate guide 237 may include a curved surface extending roundly downward so that water can naturally fall downward toward the drain tank 250.

The first condensate guide 237 may be disposed to cover the second through-hole 126b or to surround at least a portion of the perimeter of the second through-hole 126b.

The first condensate guide 237 may be coupled to the upper surface of the drain tank 250, that is, the tank cover 252 (see FIG. 26).

The second part B may further include a fourth partition 127 that divides the installation space of the tanks 250 and 260 into the installation space of the drain tank 250 and the installation space of the supply tank 260. The fourth partition wall 127 extends forward from the third partition wall 126 and may protrude upward from the base 210.

Sensors 256 and 266 that detect magnets 255 and 265 provided in the tanks 250 and 260 may be installed on the third partition wall 126. The sensors 256 and 266 may detect that the tanks 250 and 260 are mounted by detecting the magnets 255 and 265. If the sensors 256 and 266 do not detect the magnets 255 and 265, it can be recognized that the tanks 250 and 260 are not installed.

Based on whether the tanks 250 and 260 are mounted, information regarding whether the tanks 250 and 260 are mounted may be displayed on the display 108 or the auxiliary display 280.

The sensors 256 and 266 may include a first sensor 256 disposed on one side of the drain tank 250, that is, a portion facing the rear surface, with respect to the fourth partition 127. For example, a plurality of first sensors 256 are provided, and the plurality of first sensors 256 may be arranged in the left and right direction or in the vertical direction while facing one side of the drain tank 250.

The sensors 256 and 266 may include a second sensor 266 disposed on one side of the supply tank 260, that is, a portion facing the rear surface, with respect to the fourth partition wall 127. For example, a plurality of first sensors 256 are provided, and the plurality of second sensors 266 may be arranged in the left and right direction or in the vertical direction while facing one side of the supply tank 260.

The second part B may include a first installation guide 128a that guides the installation of the drain tank 250. The first mounting guide 128a protrudes upward from the base 210 and may be connected to the third partition wall 126.

The first mounting guide 128a may include a first part 128a1 supporting the first surface of the drain tank 250 and a second part 128a2 supporting the second surface of the drain tank 250. The first part 128a1 and the second part 128a2 may extend in different directions so that the first mounting guide 128a has a bent shape.

The third surface of the drain tank 250 may be supported by the fourth partition wall 127.

The second part B may include a second mounting guide 128b that guides the mounting of the supply tank 260. The second mounting guide 128b protrudes upward from the base 210 and may be connected to the third partition wall 126.

The second mounting guide 128b may include a first part 128b1 supporting the first surface of the supply tank 260 and a second part 128b2 supporting the second surface of the drain tank 250. The first part 128b1 and the second part 128b2 may be extended in different directions so that the second mounting guide 128b has a bent shape.

A first extension pipe 185a extending from the supply tank 260 may be located on the upper side of the second mounting guide 128b. The first extension pipe 185a may be coupled to the discharge part 263c (see FIG. 28) of the tank duct 263 provided in the supply tank 260.

The discharge part 263c is located adjacent to the upper end portion of the supply tank 260, and accordingly, the discharge part 263c and the first extension pipe 185a may not interfere with the second mounting guide 128b.

The base 210 may include a rail 215 that guides the mounting of the tanks 250 and 260. The rail 215 protrudes from the base 210 and may be configured to extend in the direction in which the tanks 250 and 260 are mounted, that is, in the front and rear direction.

The rail 215 may include a first rail 215a provided on a portion of the base 210 in the area where the drain tank 250 is mounted. The first rail 215a may be inserted into the first rail groove 254 formed on the lower surface of the drain tank 250.

The first rail 215a may include a first part 215a1 extending upward from the base 210 and a second part 215a2 extending to both sides of the first part 215a1.

The rail 215 may include a second rail 215b provided on a portion of the base 210 in the area where the supply tank 260 is mounted. The second rail 215b may be inserted into the second rail groove 264 formed on the lower surface of the supply tank 260.

The description of the configuration of the second rail 215b refers to the description of the first rail 215a.

FIG. 26 is a view illustrating the configuration of a drain tank according to an embodiment of the present disclosure, FIG. 27 is a view illustrating the cover of a drain tank according to an embodiment of the present disclosure, FIG. 28 is a view illustrating the configuration of a supply tank according to an embodiment of the present disclosure, and FIG. 29 is a cross-sectional view taken along line 29-29 of FIG. 21.

Referring to FIGS. 26 to 29, the drain tank 250 according to an embodiment of the present disclosure may have the shape of a closed housing capable of storing water. The drain tank 250 may include a tank main body 251 including the front, rear, side, and lower surfaces.

The side of the tank body 251 may include a first support surface 251a supported by the first part 128a1 of the first mounting guide 128a. The side of the tank main body 251 may include a second support surface 251b supported by the second part 128a2 of the first mounting guide 128a. The first support surface 251a and the second support surface 251b may form a bent surface.

The drain tank 250 may further include a tank cover 252 forming an upper surface. The tank cover 252 may be detachably coupled to the upper portion of the tank main body 251. The user may remove the tank cover 252 and discard the water stored in the drain tank 250.

A magnet 255 may be mounted on the rear surface of the drain tank 250. A plurality of magnets 255 may be provided. The plurality of magnets 255 may be placed at the corners of the rear surface.

The drain tank 250 may further include a second condensate guide 253 that guides water flowing into the drain tank 250.

The second condensate guide 253 is provided at the upper end of the drain tank 253, and together with the first condensate guide 237, it can guide water to descend along the wall surface of the drain tank 250.

At least a portion of the second condensate guide 253 may be provided outside the drain tank 250 and another portion thereof may be provided inside the drain tank 250.

The second condensate guide 253 may be coupled to the tank cover 252.

The upper end of the second condensate guide 253 protrudes from the upper end of the drain tank 250, that is, the upper end of the tank cover 252, and when the drain tank 250 is mounted in front of the third partition wall 126, the upper end of the second condensate guide may be positioned in contact with or adjacent to the lower end of the first condensate guide 237.

An inlet 253a through which water flows may be formed at the upper end of the second condensate guide 253.

The second condensate guide 253 may include a guide surface 253b extending downward from the inlet 253a and extending into the interior of the drain tank 250. The guide surface 253b extends to be bent or rounded in a direction approaching the third partition wall 126, and while condensate flows along the guide surface 253b, the condensate may fall along the wall, that is, the rear surface, of the drain tank 250.

The lower end portion of the second condensate guide 253 may form a discharge part 253c that discharges condensed water into the storage space of the drain tank 250. The discharge part 253c and the rear surface of the drain tank 250 may form a discharge space for condensed water.

According to this configuration, the first and second condensate guides 237 and 253 and the walls of the drain tank 250 may form a space for condensate to flow. Even if condensate having a high flow rate flows into the drain tank 250 through the condensate pipe 236, the condensate may easily fall along the wall of the drain tank 250 without being splashed into the drain tank 250.

The supply tank 260 may have the shape of a closed housing capable of storing water. The supply tank 260 may include a tank main body 261 including the front, rear, side, and lower surfaces.

The side of the tank main body 261 may include a first support surface 261a supported by the first part 128b1 of the second mounting guide 128b. The side of the tank main body 261 may include a second support surface 261b supported by the second part 128b2 of the second mounting guide 128b. The first support surface 261a and the second support surface 261b may form a bent surface.

The supply tank 260 may further include a tank cover 262 forming an upper surface. The tank cover 262 may be detachably coupled to the upper portion of the tank main body 261. The user may remove the tank cover 262 and fill the supply tank 260 with water.

A magnet 265 may be mounted on the rear surface of the supply tank 260. A plurality of magnets 265 may be provided. The plurality of magnets 265 may be disposed in the vertical direction on the rear surface.

The supply tank 260 may further include a tank duct 263 that forms a water flow path to supply water stored in the supply tank 260 to the outside.

The tank duct 263 may be fluidly connected to the water pump 180.

The tank duct 263 may include a duct main body 263a provided inside the supply tank 260.

The duct main body 263a may extend downward from a position adjacent to the upper end of the supply tank 260 to a position adjacent to the lower end thereof.

The tank duct 263 may be mounted on the wall of the supply tank 260.

The tank duct 263 forms a lower end portion and may include an inlet 263b through which water stored in the supply tank 260 flows

The tank duct 263 forms an upper end portion and may include a discharge part 263c that discharges water flowing through the tank duct 263 to the outside of the supply tank 260.

The discharge part 263c protrudes from the duct main body 263a toward the wall of the supply tank 260 and may extend to the outside of the supply tank 260 through the wall of the supply tank 260. A through-hole through which the discharge part 263c passes may be formed in the wall of the supply tank 260.

The discharge part 263c is located above the second mounting guide 128b and may not interfere with the second mounting guide 128b.

The first connection pipe 185a may be coupled to the discharge part 263c. The first connection pipe 185a may be detachably coupled to the discharge part 263c. When separating the supply tank 260, the user can separate the first connection pipe 185a from the discharge part 263c.

To facilitate the user's manipulation of the supply tank 260, the first connector 185a may be made of a flexible material.

When the water pump 180 is driven, the water stored in the supply tank 260 flows into the inlet 263b of the tank duct 263 and flows upward, and may be discharged through the discharge part 263c. Water discharged from the supply tank 260 may be supplied to the dehumidification module 300 through the first connection pipe 185a, the water pump 180, and the second connection pipe 185b.

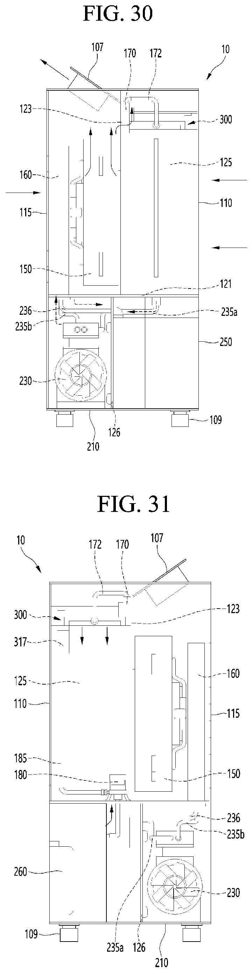

FIG. 30 is a view illustrating a state where the first suction flow and the second suction flow are suctioned and a discharge flow is generated in the dehumidifier according to an embodiment of the present disclosure, and FIG. 31 is a view illustrating a state where fluid is supplied from a supply tank to a dehumidification module in a dehumidifier according to an embodiment of the present disclosure.

First, referring to FIG. 30, when the two-way suction fan 150 is driven, the first suction flow flowing into the inside of the dehumidifier 10 through the first suction part 110a and a second suction flow flowing into the interior of the dehumidifier 10 through the second suction part 115a may be generated.

The first suction flow may separate moisture (water vapor) from the air while passing through the dehumidification module 300. The air from which the moisture has been separated may be suctioned in in the axial direction through the first suction side of the fan 150, flow in the radial direction, and be discharged through the upper end of the fan 150.

The separated moisture may be discharged downward from the dehumidification module 300 and flow into the heat exchanger 160 through the connection pipe 235 and the vacuum pump 230.

The second suction flow passes through the heat exchanger 160, and in this process, moisture flowing into the heat exchanger 160 may be condensed. The air in which the moisture has been condensed is discharged from the heat exchanger 160 and may be suctioned in in the axial direction through the second suction side of the fan 150.

The second suction flow passing through the fan 150 may flow in a radial direction and be discharged through the upper end of the fan 150. The second suction flow may combine with the first suction flow, flow upward, and be discharged through the discharge part 106 of the dehumidifier 10. The discharge vane 107 may control the amount of air discharged from the discharge part 106.

At least some of the air discharged from the upper end of the fan 150 may flow into the valve device 170 through the guide hole 123b formed in the second partition wall 123. At this time, the valve device 170 may be opened, and air may be supplied to the dehumidification module 300 through the valve device 170 and the supply pipe 172.

The air supplied to the dehumidification module 300 may remove water vapor accumulated inside the dehumidification member 320.

Next, referring to FIG. 31, when the water pump 180 is driven, the water stored in the supply tank 260 may be supplied to the dehumidification module 300 through the supply connection pipe 185 and the water supply pump 180.

The water supplied to the dehumidification module 300 flows into the water supply duct 315 of the dehumidification module 300 and may be supplied to the surroundings of the dehumidification member 320 through the water supply hole 315a. Because water may be in contact with the surface of the dehumidification member 320 due to the suction force of the fan 150, the dehumidification member 320 may become wet, and thus the moisture separation performance in the dehumidification member 320 may be improved.

## Claims

1. A dehumidifier (10) comprising:
a main body (100) including a suction part (110a,115a) and a fan (150);
a dehumidification module (300) including a dehumidification member (320) configured to separate moisture of air suctioned from the suction part (110a, 115a) by driving of the fan;
a vacuum pump (230) configured to provide driving force by which the moisture separated from the dehumidification module (300) is discharged to the outside of the dehumidification module (300);
a heat exchanger (160) fluidly connected to the vacuum pump (230) to condense the separated moisture; and
a drain tank (250) configured to store water condensed in the heat exchanger (160),
wherein the main body (100) is configured so that a first part (A) configured to generate an air flow passing through the dehumidification module (300) and the fan (150) and a second part (B) in which the vacuum pump (230) and the drain tank (250) are disposed are partitioned by a partition wall (121).

2. The dehumidifier according to claim 1, wherein the second part (B) is disposed below the partition wall (121) so that the dehumidification module (300) is mounted at an upper side of the partition wall (121), and the separated moisture falls toward the vacuum pump (230).

3. The dehumidifier according to claim 1 or 2, wherein the dehumidification module (300) comprises a connection port (360) coupled to the partition wall (!21) to discharge the separated moisture, and
wherein the partition wall (121) comprises a port communication hole (121c) through which the connection port (360) passes.

4. The dehumidifier according to claim 3, wherein the partition wall (121) comprises a protrusion (122) into which the connection port (360) is inserted, and
the dehumidifier further comprises a connection pipe (235) connected to the vacuum pump (230) in the protrusion (122).

5. The dehumidifier according to claim 4, wherein the connection pipe (235) constitutes at least a portion of the second part (B).

6. The dehumidifier according to claim 4 or 5, wherein the connection pipe (360) comprises:
a first connection pipe (235a) coupled to the partition wall (121) and connected to a suction-side of the vacuum pump (230); and
a second connection pipe (235b) connected to a discharge-side of the vacuum pump (230) to transfer the separated moisture to the heat exchanger (160).

7. The dehumidifier according to any one of claims 4 to 6, wherein the partition wall (121) comprises an inlet port (121a) connected to the connection pipe (235) to supply the separate moisture to the heat exchanger (160).

8. The dehumidifier according to any one of claims 1 to 7, further comprising:
a discharge port (121b) provided on the partition wall (121) and coupled to a discharge part of the heat exchanger (160); and
a condensate pipe (236) connected to the discharge port (121b) to guide condensate to the drain tank (250).

9. The dehumidifier according to any one of claims 1 to 8, wherein the partition wall (121) is a first partition wall, and
the dehumidifier further comprises a second partition wall (123) configured to divide the first part (A) into a first space, in which the dehumidification module (300) is installed, and a second space, in which the fan (150) is installed, the second partition (123) having a fan suction part (123a).

10. The dehumidifier according to any one of claims 1 to 9, further comprising a third partition wall (126) configured to divide the second part (B) into a first space, in which the drain tank (250) is installed, and a second space, in which the vacuum pump (230) is installed.

11. The dehumidifier according to claim 10, wherein the third partition wall (126) comprises a first through-hole (126a), and
wherein the dehumidifier further comprises a connection pipe (235a) extending from the dehumidification module (300) to pass through the first through-hole (126a) and configured to guide the moisture separated from the dehumidification module (300) to the vacuum pump (230).

12. The dehumidifier according to claim 10, wherein the third partition wall (126) comprises a second through-hole (126b), and
the dehumidifier further comprises a condensate pipe (236) extending from the heat exchanger (160) and coupled to the second through-hole (126b), the condensate pipe (236) being configured to guide water condensed in the heat exchanger (160) to the drain tank (250).

13. The dehumidifier according to any one of claims 1 to 12, wherein the lower part comprises:
a supply tank (260); and
a fourth partition wall (127) configured to separate the supply tank (260) and the drain tank (250) from each other.

14. The dehumidifier according to claim 13, further comprising:
a supply connection pipe (185) connected to the supply tank (260) and extending to pass through the partition wall (121), the supply connection pipe (185) being configured to supply water from the supply tank (260) to the dehumidification module (300); and
a water pump (180) installed on the supply connection pipe (185).

## Amended claims

### Amended claims in accordance with Rule 137(2) EPC.

1. A dehumidifier (10) comprising:
a main body (100) including a suction part (110a,115a) and a fan (150);
a dehumidification module (300) including a dehumidification member (320) configured to separate moisture of air suctioned from the suction part (110a,115a) by driving of the fan;
a vacuum pump (230) configured to provide driving force by which the moisture separated from the dehumidification module (300) is discharged to the outside of the dehumidification module (300); and
a heat exchanger (160) fluidly connected to the vacuum pump (230) to condense the separated moisture,
**characterized in that** the dehumidifier (10) further comprises a drain tank (250) configured to store water condensed in the heat exchanger (160), and
the main body (100) is configured so that a first part (A) configured to generate an air flow passing through the dehumidification module (300) and the fan (150) and a second part (B) in which the vacuum pump (230) and the drain tank (250) are disposed are partitioned by a partition wall (121).

2. The dehumidifier according to claim 1, wherein the second part (B) is disposed below the partition wall (121) so that the dehumidification module (300) is mounted at an upper side of the partition wall (121), and the separated moisture falls toward the vacuum pump (230).

3. The dehumidifier according to claim 1 or 2, wherein the dehumidification module (300) comprises a connection port (360) coupled to the partition wall (121) to discharge the separated moisture, and
wherein the partition wall (121) comprises a port communication hole (121c) through which the connection port (360) passes.

4. The dehumidifier according to claim 3, wherein the partition wall (121) comprises a protrusion (122) into which the connection port (360) is inserted, and
the dehumidifier further comprises a connection pipe (235) connected to the vacuum pump (230) in the protrusion (122).

5. The dehumidifier according to claim 4, wherein the connection pipe (235) constitutes at least a portion of the second part (B).

6. The dehumidifier according to claim 4 or 5, wherein the connection pipe (360) comprises:
a first connection pipe (235a) coupled to the partition wall (121) and connected to a suction-side of the vacuum pump (230); and
a second connection pipe (235b) connected to a discharge-side of the vacuum pump (230) to transfer the separated moisture to the heat exchanger (160).

7. The dehumidifier according to any one of claims 4 to 6, wherein the partition wall (121) comprises an inlet port (121a) connected to the connection pipe (235) to supply the separate moisture to the heat exchanger (160).

8. The dehumidifier according to any one of claims 1 to 7, further comprising:
a discharge port (121b) provided on the partition wall (121) and coupled to a discharge part of the heat exchanger (160); and
a condensate pipe (236) connected to the discharge port (121b) to guide condensate to the drain tank (250).

9. The dehumidifier according to any one of claims 1 to 8, wherein the partition wall (121) is a first partition wall, and
the dehumidifier further comprises a second partition wall (123) configured to divide the first part (A) into a first space, in which the dehumidification module (300) is installed, and a second space, in which the fan (150) is installed, the second partition (123) having a fan suction part (123a).

10. The dehumidifier according to any one of claims 1 to 9, further comprising a third partition wall (126) configured to divide the second part (B) into a first space, in which the drain tank (250) is installed, and a second space, in which the vacuum pump (230) is installed.

11. The dehumidifier according to claim 10, wherein the third partition wall (126) comprises a first through-hole (126a), and
wherein the dehumidifier further comprises a connection pipe (235a) extending from the dehumidification module (300) to pass through the first through-hole (126a) and configured to guide the moisture separated from the dehumidification module (300) to the vacuum pump (230).

12. The dehumidifier according to claim 10, wherein the third partition wall (126) comprises a second through-hole (126b), and
the dehumidifier further comprises a condensate pipe (236) extending from the heat exchanger (160) and coupled to the second through-hole (126b), the condensate pipe (236) being configured to guide water condensed in the heat exchanger (160) to the drain tank (250).

13. The dehumidifier according to any one of claims 1 to 12, wherein the lower part comprises:
a supply tank (260); and
a fourth partition wall (127) configured to separate the supply tank (260) and the drain tank (250) from each other.

14. The dehumidifier according to claim 13, further comprising:
a supply connection pipe (185) connected to the supply tank (260) and extending to pass through the partition wall (121), the supply connection pipe (185) being configured to supply water from the supply tank (260) to the dehumidification module (300); and
a water pump (180) installed on the supply connection pipe (185).
